# EUROPEAN PATENT SPECIFICATION

(11) **EP 3 452 428 B1**
(45) Date of publication and mention of the grant of the patent: **21.01.2026**
(21) Application number: 16719874.6
(22) Date of filing: 03.05.2016
(51) Int. Cl.: C04B 28/14, C04B 111/50, C04B 111/34, C04B 111/60

(54) **CONSTRUCTION CHEMICAL FORMULATION**
BAUCHEMISCHE FORMULIERUNG
FORMULATION CHIMIQUE POUR LA CONSTRUCTION

(43) Date of publication of application: 13.03.2019
(73) Proprietor: BASF SE, 67056 Ludwigshafen am Rhein (DE)
(72) Inventor: HESSE, Christoph, 83308 Trostberg (DE); SEIP, Klaus, 67056 Ludwigshafen (DE); SCHINABECK, Michael, 83308 Trostberg (DE); LOGES, Niklas, 83308 Trostberg (DE)
(74) Representative: BASF IP Association
(86) International application number: PCT/EP2016/059813
(87) International publication number: WO 2017/190766

(56) References cited:
- EP-A1- 2 913 316
- WO-A1-2015/150319
- DE-A1- 10 101 314

## Description

The present invention relates to a construction chemical formulation which comprises calcium sulfate, an ettringite former, an activator, an aggregate, and a polymeric binder, and also to the use of the construction chemical formulation for producing sealants, coatings, adhesives, screeds, or leveling compositions.

The laying of floor coverings such as PVC, rubber, or textile coverings, for example, imposes particular requirements on the substrate. For compensating unevennesses in finished or unfinished floors, leveling/troweling compositions or screeds are employed. These systems ensure qualities including leveling and a constant absorbency on the part of the substrate. Where rapid progress of construction is to be realized, cementitious troweling/leveling compositions are frequently employed (with subsequent laying possible in some cases after an hour). Such cementitious systems possess a high cement fraction, in order to bind excess water chemically. Given that hydration of the cement is accompanied by a change in volume, such systems harden in some cases with severe stresses. Consequently, there are restrictions to the use of cementitious systems on unstable substrates. Because of the brittleness of the hardened composition, there is a risk of cracking. Moreover, cementitious troweling/leveling compositions are usually subject to labeling requirements.

Examples of cementitious troweling compositions or thin-bed mortars, comprising calcium sulfate, calcium sulfoaluminate cement, and calcium hydroxide or calcium oxide, are known from WO 99/07648. Despite the addition of a small amount of dispersion-based powder (3 - 3.5%, based on the total mass of troweling composition or thin-bed mortar), the expectation is that these compositions will be marked by brittleness, will not harden stress-free, and will tend to crack.

Further examples of cement-based troweling compositions or screed compositions, likewise with the aforementioned disadvantages, are set out below.

US 2008/0141907 A1 relates to screeds comprising sand from recycled glass waste, calcium sulfoaluminate cement, powdered limestone, Portland cement, calcium sulfate hemihydrate, and other additives, such as accelerators or retarders, for example.

US 2012/0037046 A1 describes a screed composition which includes, among other components, a cementitious binder comprising calcium sulfoaluminate cement, Portland cement, and calcium sulfate.

WO 2008/003672 A1 relates to a troweling composition comprising Portland cement, alumina-containing cement, a source of reactive sulfates, and fillers or pigments.

EP 2 762 545 A1 disclosed a two-component, flexible and fast curing composition for sealing buildings and roofs. The composition consists a liquid component comprising an anionic bituminous emulsion and an anionic polymer dispersion and a powder component comprising a blend of hydraulic additives, latent hydraulic additives, non-hydraulic additives, light weight fillers, fillers, and aggregates.

EP 2 913 316 A1 discloses a ternary binder system on the basis of two different calcium aluminates and a sulfate carrier.

DE 101 01 314 A1 discloses an adhesive consisting of a powder component comprising inter alia a blend of Portland cement, calcium aluminate cement and calcium sulfate, and a liquid component comprising a resin dispersion.

DE 10 2013 200 122 A1 discloses a binder composition comprising calcium sulfate, Portland cement, calcium aluminate cement, and zeolith and/or metakaolin.

A disadvantage affecting the calcium sulfate-containing construction products known from the prior art is the slow drying. As a result, the time before further processing can take place is significantly prolonged, and the progress of construction is delayed. The cause of the extended drying time of known calcium sulfate-based construction products is the hydration process. Whereas in the hydration products of purely cementitious binders, water is bound chemically into the hydrate phases, the hydration of calcium sulfate binders is accompanied by precipitation of the hydration products from a supersaturated solution. In calcium sulfate-based systems, the excess mixing water must be given up primarily to the environment. Leveling and troweling compositions based on calcium sulfate that can be further-processed in a time of less than 12-24 hours are therefore unknown in the prior art.

Aside from cementitious systems, for troweling compositions for example, there are also dispersion-bound formulations known (see EP 1260490 A1). An increased fraction of dispersion-based powder does allow the elasticity of the dried compositions to be increased to a certain degree and hence the brittleness of the compositions to be reduced somewhat. A disadvantage of these compositions as well, however, is the significantly decelerated drying by comparison with cementitious systems. The possibility of rapid further processing in less than 6 hours cannot be achieved even with these prior-art formulations. For these systems, moreover, there is no expectation of complete elasticity.

In summary, then, the disadvantages of construction chemical formulations from the prior art can be described as follows: Cementitious systems lead to hardening which is rapid, but not free from stresses. Brittleness and the risk of cracking are the consequences. Calcium sulfate-based systems harden too slowly to quickly ensure the capacity for further processing that is necessary for speedy progress of construction. Dispersion-bound systems, while they do lead to slightly reduced brittleness, are nevertheless very slow to dry.

It is an object of the invention, therefore, to provide formulations for construction products that bring about rapid drying and hence the rapid attainment of capacity for further processing (more particularly after just 4 to 6 hours). In this way, the formulations are intended to allow speedy progress of construction. Furthermore, the formulations for construction products are to harden without stress and to permit elastic systems. A further object of the invention is to provide formulations for the production of sealing slurries, roof coatings, adhesives, screeds, or leveling compositions, which have the properties stated above.

The present object is achieved by means of a construction chemical formulation comprising
a) calcium sulfate in an amount of 1 to about 10 wt%,
b) at least one ettringite former selected from calcium sulfoaluminate cement (CSA cement), sodium aluminate, high-alumina cement, aluminum sulfate, and mixtures thereof, in an amount of 3 to 9 wt%,
c) at least one activator selected from Portland cement, calcium hydroxide, sodium hydroxide, potassium hydroxide, and mixtures thereof, in an amount of about 1 to about 10 wt%, and
d) at least one aggregate in an amount of 43 to 85 wt%, and
e) at least one polymeric binder in an amount of 10 to 30 wt%.

Quantity figures relating to components a) to e) make up together 100 wt% and relate to the total weight of solids of said components.

In one preferred embodiment of the construction chemical formulation of the invention, the calcium sulfate is selected from calcium sulfate α-hemihydrate, calcium sulfate β-hemihydrate, and anhydrite, and mixtures thereof. The calcium sulfate is preferably present in the form of hemihydrate. Calcium sulfate is present in the construction chemical formulation of the invention in an amount of about 1 to about 10 wt%, with preference being given to an amount of about 1 to about 9 wt%.

Polymeric binders may be aqueous polymer dispersions and/or the water-redispersible dispersion-based powders obtainable from them. Polymeric binders are obtained via conventional, suitable polymerization processes, such as emulsion polymerization, for example. Both emulsifier-stabilized dispersions and those stabilized with protective colloid can be used. An example of a suitable protective colloid is polyvinyl alcohol. To produce the water-redispersible dispersion-based powders, the polymer dispersion is dried, by means of spray drying, for example.

In one preferred embodiment of the construction chemical formulation, the polymeric binder is a polymer based on (meth)acrylic esters, vinylaromatics, vinyl esters, vinyl halides, or olefins, or a copolymer of two or more of these monomers, or a mixture of two or more of the polymers and/or copolymers. The polymers or copolymers preferably have hydrophobic qualities.

With more particular preference the polymer binder is a polymer based on styrene, a (meth)acrylic ester, polyvinyl acetate, or a copolymer thereof, or a mixture of two or more of the polymers or copolymers.

Examples of vinyl esters are, in particular, the esters of linear or branched alkane carboxylic acids having 1 to 8 carbon atoms, more particularly vinyl acetate, vinyl propionate, vinyl butyrate, vinyl 2-ethylhexanoate, 1-methylvinyl acetate, vinyl laurate, or vinyl versatate.

Examples of (meth)acrylic esters are more particularly (meth)acrylic acid alkyl esters, with "alkyl" standing for linear or branched alkyl radicals having 1 to 8 carbon atoms, as for example methyl (meth)acrylate, ethyl (meth)acrylate, propyl (meth)acrylate, n-butyl (meth)acrylate, and 2-ethylhexyl (meth)acrylate.

Preferred olefins are ethylene, propylene, 1-butene, 2-methylpropene, and 1,3-butadiene, with ethylene being especially preferred.

Preferred vinyl halogen monomers are vinyl chloride and vinylidene chloride.

Examples of copolymers based on vinyl esters are vinyl acetate-ethylene copolymers, vinyl acetate-vinyl ester copolymers, or vinyl acetate-vinyl ester-ethylene copolymers, with the vinyl ester monomers being selected, for example, from vinyl laurate, vinyl pivalate, and vinyl versatate. Examples of copolymers based on acrylic esters are vinyl acetate-acrylic ester copolymers, vinyl acetate acrylic ester-ethylene copolymers, and styrene-acrylic ester copolymers, such as styrene-n-butyl acrylate copolymers or styrene-2-ethylhexyl acrylate copolymers. Further examples of copolymers based on acrylates or methacrylates are copolymers of n-butyl acrylate and 2-ethylhexyl acrylate, copolymers of methyl methacrylate and n-butyl acrylate and/or 2-ethylhexyl acrylate, or copolymers of methyl methacrylate and 1,3-butadiene. Examples of copolymers based on vinyl halides are vinyl ester-ethylene-vinyl chloride copolymers, vinyl chloride-ethylene copolymers, or vinyl chloride-acrylate copolymers. Of further suitability as polymeric binder in the construction chemical formulation are copolymers of 1,3-butadiene, more particularly 1,3-butadiene, and styrene.

With more particular preference the construction chemical formulation comprises copolymers of styrene and acrylic esters. The molar ratio of styrene and acrylic ester copolymers in this case is situated generally in a range from 90/10 to 10/90, more particularly in a range of 75/25 to 25/75, e.g., 50/50. Particular preference among the acrylic esters in this case is given to n-butyl acrylate or 2-ethylhexyl acrylate.

The stated polymers or copolymers may optionally comprise further functional units in an amount of 0.1 to 10 wt%, based on the total mass of polymer or copolymer. Examples of these functional units are, for example, monocarboxylic or dicarboxylic acids such as (meth)acrylic acid and/or maleic acid and salts thereof, ethylenically unsaturated carboxamides such as (meth)acrylamide, ethylenically unsaturated sulfonic acids and salts thereof, such as vinylsulfonic acid or styrenesulfonic acid, polyethylenically unsaturated compounds such as divinyl adipate, triallyl isocyanurate, diallyl maleate and/or allyl methacrylate.

The amount of polymeric binder (in case the binder is used in the form of an aqueous dispersion, the amount relates to the binder solids) in the formulation of the invention is 10 to 30 wt%, based on the total weight of components a) to e).

As a result of the above-indicated amounts of polymeric binder it is possible to obtain formulations for construction products that cure with low stress and are elastic and deformable. These qualities in the formulations are especially advantageous for use on critical substrates which, for example, have cracks.

A further ingredient in the formulation of the invention is an ettringite former. The ettringite former is present in the formulation in an amount of to 9 wt%. The ettringite former is selected from calcium sulfoaluminate cement (CSA cement), sodium aluminate, high-alumina cement, aluminum sulfate, and mixtures thereof. Particularly preferred is the use of calcium sulfoaluminate cement, high-alumina cement, and mixtures thereof as ettringite former. Especially preferred is the use of calcium sulfoaluminate cement as ettringite former.

Ettringite is a mineral from the class of the hydrous sulfates with foreign anions. It crystallizes in the monoclinic crystal system with the chemical composition Ca₆Al₂[(OH)₁₂|(SO₄)₃]·26 H₂O, and develops usually well-formed, prismatic or acicular, pseudo-hexagonal crystals. According to the notation more usual in construction chemistry, the oxidic empirical formula reads as follows: 3CaO·Al₂O₃·3CaSO₄·32H₂O. Ettringite formation in the context of this invention refers to the formation of ettringite starting from ingredients a) and b) of the formulation of the invention in the presence of component d). The formation of ettringite from the stated components a) and b) represents an advantageous opportunity to bind water without adding additional binder.

In the case of relatively small amounts of calcium sulfate, it is also possible for what are called AFm phases (H.F. W. Taylor: Cement chemistry (1997), 2nd edition, Thomas Telford Services Ltd., ISBN: 0 7277 2592 0; pages 157-170) to form as a competing reaction to the formation of ettringite. This reaction should likewise be understood as subsumed under ettringite formation in the context of this invention. The formation of AFm phases, particularly the formation of monosulfate (3CaO·Al₂O₃·CaSO₄·12H₂O or 3CaO·Al₂O₃·CaSO₄·14H₂O) leads likewise to increased water binding.

Preferably, however, the amount of calcium sulfate in the formulation of the invention is selected such that ettringite formation is preferred over the formation of AFm phases, or such that the formation of AFm phases is very largely suppressed. This is the case when the amount of calcium sulfate is about 1 to about 9 wt%.

The effect of the combined use of specific amounts of polymeric binder and ettringite former in calcium sulfate-based formulations is rapid drying and low-stress curing of the formulations. Accordingly, especially at the surface of the formulation, rapid film-forming and a quick capacity for further processing can be achieved. The resulting systems are elastic and deformable. The formulations of the invention are therefore also suitable for use on fissured substrates.

The construction chemical formulation of the invention comprises at least one activator selected from Portland cement, calcium hydroxide, sodium hydroxide, potassium hydroxide, and mixtures thereof. Present in the formulation with preference is Portland cement or calcium hydroxide or a mixture thereof.

The activator or activators are added in order to control, and preferably increase, the pH of the construction chemical formulation. For example, an amount of activator sufficient to give the construction chemical formulation a pH of 9 to 14 is added to said formulation. It is especially preferred if a pH of 10 to 13 can be set through the addition of the activator. Setting the pH by adding the activator has the effect that ettringite formation in the construction chemical formulation is triggered at a pH within the stated range. Advantageously, therefore, ettringite formation takes place not spontaneously, but rather in a manner controlled according to the addition of activator. Ettringite formation is activated in order to obtain substantially complete conversion of the ettringite former to ettringite.

In one embodiment of the construction chemical formulation, the activator is present in an amount of about 1 to about 10 wt%, preferably about 1 to about 9 wt%.

The construction chemical formulation of the invention generally also comprises an aggregate.

The aggregate preferably comprises sand and/or crushed limestone. The average particle size of the aggregate is generally 0.01 to 10 mm, preferably 0.02 to 5 mm, especially preferably 0.02 to 2 mm. The aggregate is present in the formulation in an amount of 43 to about 85 wt%.

Besides the components stated there may be further additives present in the construction chemical formulation of the invention. These additives are selected from substances and compounds which are suitable for modifying the physical and chemical properties of the construction chemical formulation of the invention. Examples of suitable additives include mineral thickeners, such as phyllosilicates (bentonite, talc, mica); acrylate thickeners; polyurethane thickeners; hydrophobically modified, alkali-swellable emulsion thickeners (HASE); cellulose ethers; starch ethers; defoamers; hydrophobizing additives; fillers; plasticizers, examples being comb polymers based on poly(meth)acrylic acid with polyethylene oxide side chain (PCEs); setting retarders, such as fruit acids (tartaric acid, citric acid); setting accelerators, such as calcium formate; and mixtures thereof.

Examples of fillers are fly ash, limestone, bentonite, talc, mica, dolomite, sand, pozzolan, blast furnace slag, titanium dioxide.

Suitable cellulose ethers are alkylcelluloses, as for example methylcellulose, ethylcellulose, propylcellulose, and methylethylcellulose, hydroxyalkylcelluloses, such as hydroxyethylcellulose (HEC), hydroxypropylcellulose (HPC), and hydroxyethylhydroxypropylcellulose, and alkylhydroxyalkylcelluloses, such as methylhydroxyethylcellulose (MHEC), methylhydroxypropylcelluose (MHPC), and propylhydroxypropylcellulose.

The amount of additives in the construction chemical formulation is dependent on the additive used and for each additive is between 0.001 to about 5 wt%, based on the total weight of components a) to e) plus additive, preferably about 0.01 to about 3 wt%, especially preferably about 0.01 to about 0.5 wt%. Thus, for example, when using methylcellulose or ethylcellulose, an amount of 0.1 to about 3 wt%, preferably about 0.5 to about 2 wt%, is employed. When using tartaric acid as retarder, an amount of 0.01 to about 1 wt%, preferably about 0.05 to about 0.5 wt%, is used.

The following is a further embodiment of the invention, wherein the formulation comprises:
a) calcium sulfate in an amount of 1 to 9 wt%,
b) at least one ettringite former in an amount of 3 to 9 wt%,
c) at least one activator in an amount of 1 to 9 wt%, ,
d) an aggregate in an amount of 43 to 85 wt%, and
e) a polymeric binder in an amount of 10 to 30 wt%.

In an embodiment, the formulation of the invention comprises essentially no zeolith and/or metakaolin. The term "essentially" means less than 2 wt%, or less than 1 wt% or less than 0.5 wt% and in particular 0 wt% metakaolin oder zeolith.

In an embodiment, the formulations of the invention are in the form of a powder mixture. In another embodiment, the formulations of the invention are in the form of a kit of two parts wherein the first part comprises a powder mixture comprising components a) to d) and the second part comprises component e) in the form of an aqueous dispersion or solution. The first and the second part of the formulation are mixed shortly before use of the formulation.

The formulations of the invention are prepared by mixing components a) to e) in any order, for example simultaneously or successively, **in** a suitable device such as pails or tanks. In an embodiment components a) to d) can be mixed separately or can be provided as a powder mixture and component e) then be added. Any additive can be added at any time during the mixing procedure or can be added to said powder mixture or to component e).

The invention also provides for the use of the construction chemical formulation according to any of the preceding embodiments for producing sealing slurries, roof coatings, adhesives or screeds.

Where the construction chemical formulation of the invention is used for producing sealing slurries, roof coatings, adhesives, or screeds, or for other construction products, the following advantageous effects are observed, brought about through the use of the construction chemical formulation: The use of the formulation of the invention permits rapid drying of the stated construction products. The drying is initiated by formation of ettringite, during which the free water in a composition (for example, and in particular, the mixing water) becomes bound as water of crystallization in ettringite. The initiation of ettringite formation is controlled by addition of an activator. The working time of the construction products can be influenced through the amount of activator. Construction products based on the construction chemical formulation of the invention harden with low stress and can be further-processed very rapidly. For example, the capacity for further processing, by application of a further coat, for example, is made possible within from 0.5 to 6 hours and even from 0.5 to 2 hours.

The particle size of the aggregate is generally 8 to 30 mm, preferably 8 to 20 mm, e.g., 8 to 15 mm. A preferred amount of aggregate in the formulation is 40 to 65 wt%.

The construction chemical formulations of the invention find preferred use in the production of thick-bed leveling compositions. Here, components a), b), c), d) and e) and any further additives, are placed into a device suitable for the purpose, in succession or simultaneously, for example, and are mixed in the device. Examples of suitable devices are pails or tanks, optionally in conjunction with a stirring mechanism. Thick-bed leveling compositions generally have a layer thickness of 10 to 100 mm, more particularly of 10 to 50 mm, such as about 40 mm, for example, and are used in particular for the leveling of critical substrates, examples being substrates exhibiting cracks.

For the production of thick-bed leveling compositions, the additives identified above can be used.

The examples which follow serve for the elucidation and illustration of the invention.

### 1. Formulas and production

The following formulas were employed as examples of water-repelling membranes comprising formulations of the invention (V.5, V.6, V.9, V.10, V.17, V.18, V.24, V.25, V.26) and of water-repelling membranes comprising comparative formulations (Ref 25%, Ref V.1, Ref V.2, Ref 10%, Ref V.5, Ref V.6, Ref 5%, Ref V.9, Ref V.10, Ref 0%, Ref V.13, Ref V.14, Ref V.15, Ref V.16, Ref 1%, Ref V.17, and Ref V.18), and were obtained by mixing of the components:

**Table 1:**

| | **Ref V.0** | **Ref V.1** | **Ref V.2** |
|---|---|---|---|
| Milke Cem I 52.5 R | 250 | 312 | 374 |
| Quartz Sand F36 | 565 | 565 | 565 |
| Omyacarb 15 GU | 180 | 118 | 56 |
| Vinapor DF 9010 (defoamer) | 4 | 4 | 4 |
| Rheovis HS 1980 (thickener) α-Hemihydrate | 1 | 1 | 1 |
| Belith CS 10 (CSA cement) | | | |
| Total dry components | 1000 | 1000 | 1000 |
| Acronal 5011 (50% form) | 398 | 398 | 398 |
| FoamStar SI 2213 (defoamer) | 2 | 2 | 2 |
| Total liquid components | 400 | 400 | 400 |

**Table 2:**

| | **Ref 10%** | **Ref V.5** | **Ref V.6** | **V.5** | **V.6** |
|---|---|---|---|---|---|
| Milke Cem I 52.5 R | 100 | 162 | 224 | 100 | 100 |
| Quartz Sand F36 | 565 | 565 | 565 | 565 | 565 |
| Omyacarb 15 GU | 330 | 268 | 206 | 268 | 206 |
| Vinapor DF 9010 | 4 | 4 | 4 | 4 | 4 |
| Rheovis HS 1980 | 1 | 1 | 1 | 1 | 1 |
| α-Hemihydrate | | | | 12 | 24 |
| Belith CS 10 | | | | 50 | 100 |
| Total dry components | 1000 | 1000 | 1000 | 1000 | 1000 |
| Acronal 5011 (50% form) | 398 | 398 | 398 | 398 | 398 |
| FoamStar SI 2213 | 2 | 2 | 2 | 2 | 2 |
| Total liquid components | 400 | 400 | 400 | 400 | 400 |

**Table 3:**

| | **Ref 5%** | **Ref V.9** | **Ref V.10** | **V.9** | **V.10** |
|---|---|---|---|---|---|
| Milke Cem I 52.5 R | 50 | 112 | 174 | 50 | 50 |
| Quartz Sand F36 | 565 | 565 | 565 | 565 | 565 |
| Omyacarb 15 GU | 380 | 318 | 256 | 318 | 256 |
| Vinapor DF 9010 | 4 | 4 | 4 | 4 | 4 |
| Rheovis HS 1980 | 1 | 1 | 1 | 1 | 1 |
| α-Hemihydrate | | | | 12 | 24 |
| Belith CS 10 | | | | 50 | 100 |
| Total dry components | 1000 | 1000 | 1000 | 1000 | 1000 |
| Acronal 5011 (50% form) | 398 | 398 | 398 | 398 | 398 |
| FoamStar SI 2213 | 2 | 2 | 2 | 2 | 2 |
| Total liquid components | 400 | 400 | 400 | 400 | 400 |

**Table 4:**

| | **Ref 0%** | **Ref V.13** | **Ref V.14** | **Ref V.15** | **Ref V.16** |
|---|---|---|---|---|---|
| Milke Cem I 52.5 R | 0 | 62 | 124 | 0 | 0 |
| Quartz Sand F36 | 565 | 565 | 565 | 565 | 565 |
| Omyacarb 15 GU | 430 | 368 | 306 | 368 | 306 |
| Vinapor DF 9010 | 4 | 4 | 4 | 4 | 4 |
| Rheovis HS 1980 | 1 | 1 | 1 | 1 | 1 |
| α-Hemihydrate | | | | 12 | 24 |
| Belith CS 10 | | | | 50 | 100 |
| Total dry components | 1000 | 1000 | 1000 | 1000 | 1000 |
| Acronal 5011 (50% form) | 398 | 398 | 398 | 398 | 398 |
| FoamStar SI 2213 | 2 | 2 | 2 | 2 | 2 |
| Total liquid components | 400 | 400 | 400 | 400 | 400 |

Milke Cem I 52.5 R is a Portland cement available commercially from Heidelberg Cement AG. Quartz Sand F36 has a quartz content of more than 99% and an average particle size of 0.16 mm. Omyacarb 15 GU is natural ground calcium carbonate and is available from OMYA GmbH, Cologne. Vinapor DF 9010 (BASF SE) is a powder defoamer based on fatty alcohol alkoxylates and polysiloxanes on an inorganic support. Rheovis HS 1980 (BASF SE) is a thickener based on polyacrylamides. Belith CS 10 is a CSA cement available from BELITH S.P.R.L. (Belgium). Acronal 5011 (BASF SE) is a styrene/acrylate-based dispersion. FoamStar SI 2213 is a product from BASF SE, based on foam-destroying polymers, emulsifiers, and silicone.

The formulations shown in tables 1 to 4 differ in the level of Portland cement. The formulas of the invention from table 1 have a Portland cement content of 25%, based on the total mass of the dry components, those from table 2 10% of Portland cement, and those from table 3 5% of Portland cement. The comparative formulas from table 4 contained no Portland cement. The corresponding levels of the Portland cement were also used in the comparative formulations Ref 25% (25% Portland cement), Ref 10% (10% Portland cement), Ref 5% (5% Portland cement), and Ref 0% (0% Portland cement). The remaining reference formulations deviated in respect of the amounts of Portland cement. The reason behind this was that for these comparative formulations, the missing mass of the hemihydrate and CSA cement components was compensated via the level of Portland cement.

### 2. Determination of the rate of film formation of the formulas

The rate of film formation of the membranes obtained according to tables 1 to 4 was determined according to DIN EN 1347. For this purpose the membranes were each applied in a thickness of 2 mm to a sealed gypsum board. A ceramic tile (5 × 5 cm) was placed on the wet composition under a weight of 1 kg for a period of 30 seconds. When the tile was removed, the mass of membrane adhering to the tile was ascertained. The first mass determination was made after 5 minutes. Thereafter, six further determinations were carried out at intervals of 10 min or 5 min each.

The wetting of the tile provided information on how rapidly a dispersion films formed on the surface of the membrane. Film formation resulted from the drying of the membrane. Accelerated film formation at the surface, therefore, must have been based on increased water binding in the membrane. Under the laboratory conditions present, the effect of evaporation could be excluded.

Tables 5 to 8 list the results for the tests according to DIN EN 1347.

**Table 5: Determination of the wetting after a plurality of passes; the figures are based on the mass of mortar in [g] sticking to the tile in each case.**

| Time after addition of the liquid components | Ref 25% | Ref V.1 | Ref V.2 |
|---|---|---|---|
| 5 min | 2.79 | 3.13 | 3.18 |
| 15 min | 3.73 | 3.30 | 3.35 |
| 25 min | 3.78 | 3.54 | 3.63 |
| 35 min | 3.58 | 3.81 | 3.88 |
| 45 min | 1.99 | 0.83 | 0.94 |
| 50 min | 0.94 | 0.00 | 0.00 |
| 55 min | 0.00 | 0.00 | 0.00 |

For the reference formulas, a slow formation of the dispersion film at the surface is observed. Water binding in these cases is therefore low (even after 45 minutes, membranes still remain adhering to the tile in all of the reference formulas). V1 and V2 show a very sharp retreat in the wetting capacity (after just 15 minutes, at the latest after 25 minutes, there is nothing still adhering to the tile). This can be attributed to the drying of the formula as a result of ettringite formation.

**Table 6: Determination of the wetting after a plurality of passes; the figures are based on the mass of mortar in [g] sticking to the tile in each case.**

| Time after addition of the liquid components | Ref 10% | Ref V.5 | Ref V.6 | V.5 | V.6 |
|---|---|---|---|---|---|
| 5 min | 3.32 | 3.13 | 3.13 | 3.40 | 3.41 |
| 15 min | 3.47 | 3.69 | 3.79 | 0.00 | 0.00 |
| 25 min | 3.71 | 3.70 | 4.03 | 0.00 | 0.00 |
| 35 min | 4.01 | 3.45 | 2.41 | 0.00 | 0.00 |
| 45 min | 1.44 | 0.13 | 0.86 | 0.00 | 0.00 |
| 50 min | 1.56 | 0.00 | 0.48 | 0.00 | 0.00 |
| 55 min | 0.74 | 0.00 | 0.00 | 0.00 | 0.00 |

Again, slow formation of the dispersion film on the surface is observed for the reference formulas. Membranes still remain adhering to the tile even after 45 minutes for all of the reference formulas. V5 and V6 show a very sharp retreat in the wetting capacity (after just 15 minutes, nothing more remains adhering to the tile). The level of Portland cement had no significant influence here.

**Table 7: Determination of the wetting after a plurality of passes; the figures are based on the mass of mortar in [g] sticking to the tile in each case.**

| Time after addition of the liquid components | Ref 5% | Ref V.9 | Ref V.10 | V.9 | V.10 |
|---|---|---|---|---|---|
| 5 min | 2.98 | 3.25 | 3.41 | 3.65 | 4.61 |
| 15 min | 3.45 | 3.85 | 3.60 | 1.85 | 2.81 |
| 25 min | 3.96 | 4.03 | 3.99 | 0.00 | 0.00 |
| 35 min | 4.12 | 4.00 | 3.70 | 0.00 | 0.00 |
| 45 min | 1.43 | 2.00 | 3.35 | 0.00 | 0.00 |
| 50 min | 0.69 | 0.72 | 0.84 | 0.00 | 0.00 |
| 55 min | 0.00 | 0.00 | 0.09 | 0.00 | 0.00 |

The results for these compositions are comparable with those from tables 5 and 6.

**Table 8: Determination of the wetting after a plurality of passes; the figures are based on the mass of mortar in [g] sticking to the tile in each case.**

| Time after addition of the liquid components | Ref 0% | Ref V.13 | Ref V.14 | Ref V.15 | Ref V.16 |
|---|---|---|---|---|---|
| 5 min | 3.50 | 3.20 | 3.07 | 3.49 | 4.36 |
| 15 min | 3.14 | 3.65 | 3.84 | 3.76 | 3.40 |
| 25 min | 4.08 | 4.41 | 4.23 | 4.00 | 3.59 |
| 35 min | 3.64 | 2.71 | 2.52 | 4.48 | 4.12 |
| 45 min | 2.79 | 1.88 | 1.70 | 2.61 | 1.82 |
| 50 min | 1.18 | 1.00 | 0.25 | 2.27 | 2.25 |
| 55 min | 0.67 | 0.00 | 0.00 | 2.32 | 4.42 |

Without addition of Portland cement, there was no rapid film formation. The comparative formulations Ref. V.13 and Ref. V.14 showed more rapid film formation than the compositions without Portland cement (independently of the presence of hemihydrate or CSA cement). These results can be attributed to the fact that without the Portland cement activator, the pH of the formulation could not be raised to more than 11 and hence the formation of ettringite was not initiated.

**Table 9:**

| | **Ref 1%** | **Ref V.17** | **Ref V.18** | **V.17** | **V.18** |
|---|---|---|---|---|---|
| Milke Cem I 52.5 R | 10 | 72 | 134 | 10 | 10 |
| Quartz Sand F36 | 565 | 565 | 565 | 565 | 565 |
| Omyacarb 15 GU | 430 | 358 | 296 | 358 | 296 |
| Vinapor DF 9010 | 4 | 4 | 4 | 4 | 4 |
| Rheovis HS 1980 | 1 | 1 | 1 | 1 | 1 |
| α-Hemihydrate | | | | 12 | 24 |
| Belith CS 10 | | | | 50 | 100 |
| Total dry components | 1000 | 1000 | 1000 | 1000 | 1000 |
| Acronal 5011 (50%ig) | 398 | 398 | 398 | 398 | 398 |
| FoamStar SI 2213 | 2 | 2 | 2 | 2 | 2 |
| Total liquid components | 400 | 400 | 400 | 400 | 400 |

**Table 10: Determination of the wetting after a plurality of passes; the figures are based on the mass of mortar in [g] sticking to the tile in each case.**

| Time after addition of the liquid components | Ref 1% | Ref V.17 | Ref V.18 | V.17 | V.18 |
|---|---|---|---|---|---|
| 5 min | 3.88 | 3.48 | 3.67 | 4.58 | 3.59 |
| 15 min | 4.04 | 4.21 | 3.96 | 3.98 | 4.09 |
| 25 min | 4.02 | 4.31 | 4.82 | 5.99 | 4.37 |
| 35 min | 4.36 | 6.40 | 5.97 | 4.26 | 5.06 |
| 45 min | 3.05 | 5.12 | 0.96 | 0.00 | 1.15 |
| 50 min | 3.00 | 2.90 | 0.80 | 0.00 | 1.23 |
| 55 min | 3.22 | 1.77 | 0.00 | 0.00 | 0.00 |

Again, slow formation of the dispersion film on the surface is observed for the reference formulas.

**Tabelle 11:**

| | **V.10** | **V.24** | **V.25** | **V.26** |
|---|---|---|---|---|
| Milke Cem I 52.5 R | 50 | 50 | 50 | 50 |
| Quartz Sand F36 | 565 | 565 | 565 | 565 |
| Omyacarb 15 GU | 256 | 230 | 205 | 180 |
| Vinapor DF 9010 | 4 | 4 | 4 | 4 |
| Rheovis HS 1980 | 1 | 1 | 1 | 1 |
| α-Hemihydrat | 24 | 50 | 75 | 100 |
| Belith CS 10 | 100 | 100 | 100 | 100 |
| Total dry components | 1000 | 1000 | 1000 | 1000 |
| Acronal 5011 (50%ig) | 398 | 398 | 398 | 398 |
| FoamStar SI 2213 | 2 | 2 | 2 | 2 |
| Total liquid components | 400 | 400 | 400 | 400 |

**Tabelle 12: Determination of the wetting after a plurality of passes; the figures are based on the mass of mortar in [g] sticking to the tile in each case.**

| Time after addition of the liquid components | **V.10** | **V.24** | **V.25** | **V.26** |
|---|---|---|---|---|
| 5 min | 4.61 | 4.46 | 5.15 | 4.76 |
| 15 min | 2.81 | 3.40 | 3.79 | 4.45 |
| 25 min | 0.00 | 0.00 | 0.02 | 0.00 |
| 35 min | 0.00 | 0.00 | 0.00 | 0.00 |
| 45 min | 0.00 | 0.00 | 0.00 | 0.00 |
| 50 min | 0.00 | 0.00 | 0.00 | 0.00 |
| 55 min | 0.00 | 0.00 | 0.00 | 0.00 |

Again, slow formation of the dispersion film on the surface is observed for the reference formula Ref 5%. With increasing calcium sulfate content (V.10, V.24, V.25, V.26) the formation of the dispersion film becomes slower but is faster compared to the reference Ref 5%.

## Claims

1. A construction chemical formulation comprising
a) calcium sulfate in an amount of 1 to 10 wt%,
b) at least one ettringite former selected from calcium sulfoaluminate cement (CSA cement), sodium aluminate, high-alumina cement, aluminum sulfate, and mixtures thereof, in an amount of 3 to 9 wt%,
c) at least one activator selected from Portland cement, calcium hydroxide, sodium hydroxide, potassium hydroxide, and mixtures thereof, in an amount of 1 to 10 wt%,
d) at least one aggregate in an amount of 43 to 85 wt%, and
e) at least one polymeric binder in an amount of 10 to 30 wt%,
wherein the amount of the components is based on the total weight of the solids of the components a) to e) .

2. The construction chemical formulation according to claim 1, wherein the calcium sulfate is selected from calcium sulfate α-hemihydrate, calcium sulfate β-hemihydrate, anhydrite, and mixtures thereof.

3. The construction chemical formulation according to claim 1 or 2, wherein the calcium sulfate is present in the formulation in an amount of 1 to 8 wt%.

4. The construction chemical formulation according to any of the preceding claims, wherein the polymeric binder is a polymer based on (meth)acrylic esters, vinylaromatics, vinyl esters, vinyl halides, dienes, or olefins, or a copolymer of two or more of these monomers, or a mixture of two or more of the polymers and/or copolymers.

5. The construction chemical formulation according to claim 4, wherein the polymeric binder is a polymer based on styrene, a (meth)acrylic ester, polyvinyl acetate, or a copolymer thereof, or a mixture of two or more of the polymers or copolymers.

6. The construction chemical formulation according to claim 1 comprising
a) calcium sulfate in an amount of 1 to 9 wt%,
b) at least one ettringite former in an amount of 3 to 9 wt%,
c) at least one activator in an amount of 1 to 9 wt%, ,
d) an aggregate in an amount of 43 to 85 wt%, and
e) a polymeric binder in an amount of 10 to 30 wt%.

7. The construction chemical formulation according to any of the preceding claims, additionally comprising at least one additive.

8. The construction chemical formulation according to claim 7, wherein the additive is selected from fillers, plasticizers, setting retarders, setting accelerators, thickeners, and mixtures thereof.

9. The construction chemical formulation according to any of the preceding claims, wherein the aggregate is selected from sand, crushed limestone, or a mixture thereof.

10. The construction chemical formulation according to any of the preceding claims, in the form of two parts, wherein the first part comprises components a) to d) and the second part comprises component e) in the form of an aqueous polymer dispersion.

11. The use of the construction chemical formulation according to any of claims 1 to 10 for producing sealing slurries, roof coatings, adhesives, or screeds.

## Patentansprüche

1. Bauchemische Formulierung enthaltend
a) Calciumsulfat in einer Menge von 1 bis 10 Gew.-%,
b) mindestens einen Ettringitbildner, ausgewählt aus Calciumsulfoaluminatzement (CSA-Zement), Natriumaluminat, Tonerdezement, Aluminiumsulfat und Mischungen davon, in einer Menge von 3 bis 9 Gew.-%,
c) mindestens einen Aktivator, ausgewählt aus Portlandzement, Calciumhydroxid, Natriumhydroxid, Kaliumhydroxid und Mischungen davon, in einer Menge von 1 bis 10 Gew.-%,
d) mindestens ein Aggregat in einer Menge von 43 bis 85 Gew.-% und
e) mindestens ein polymeres Bindemittel in einer Menge von 10 bis 30 Gew.-%,
wobei sich die Menge der Komponenten auf das Gesamtgewicht der Feststoffe der Komponenten a) bis e) bezieht.

2. Bauchemische Formulierung nach Anspruch 1, wobei das Calciumsulfat aus Calciumsulfat-α-hemihydrat, Calciumsulfat-β-hemihydrat, Anhydrit und Mischungen davon ausgewählt ist.

3. Bauchemische Formulierung nach Anspruch 1 oder 2, wobei das Calciumsulfat in der Formulierung in einer Menge von 1 bis 8 Gew.-% vorliegt.

4. Bauchemische Formulierung nach einem der vorhergehenden Ansprüche, wobei es sich bei dem polymeren Bindemittel um ein Polymer auf Basis von (Meth)acrylsäurestern, Vinylaromaten, Vinylestern, Vinylhalogeniden, Dienen oder Olefinen oder ein Copolymer von zwei oder mehr dieser Monomere oder ein Gemisch von zwei oder mehr der Polymere und/oder Copolymere handelt.

5. Bauchemische Formulierung nach Anspruch 4, wobei es sich bei dem polymeren Bindemittel um ein Polymer auf Basis von Styrol, einem (Meth)acrylsäureester, Polyvinylacetat oder ein Copolymer davon oder ein Gemisch von zwei oder mehr der Polymere oder Copolymere handelt.

6. Bauchemische Formulierung nach Anspruch 1 enthaltend
a) Calciumsulfat in einer Menge von 1 bis 9 Gew.-%,
b) mindestens einen Ettringitbildner in einer Menge von 3 bis 9 Gew.-%,
c) mindestens einen Aktivator in einer Menge von 1 bis 9 Gew.-%,
d) ein Aggregat in einer Menge von 43 bis 85 Gew.-% und
e) ein polymeres Bindemittel in einer Menge von 10 bis 30 Gew.-%.

7. Bauchemische Formulierung nach einem der vorhergehenden Ansprüche, die zusätzlich mindestens ein Additiv enthält.

8. Bauchemische Formulierung nach Anspruch 7, wobei das Additiv aus Füllstoffen, Verflüssigern, Abbindeverzögerern, Abbindebeschleunigern, Verdickern und Mischungen davon ausgewählt ist.

9. Bauchemische Formulierung nach einem der vorhergehenden Ansprüche, wobei das Aggregat aus Sand, Kalksteinbruch oder einem Gemisch davon ausgewählt ist.

10. Bauchemische Formulierung nach einem der vorhergehenden Ansprüche in Form von zwei Teilen, wobei der erste Teil die Komponenten a) bis d) enthält und der zweite Teil die Komponente e) in Form einer wässrigen Polymerdispersion enthält.

11. Verwendung der bauchemischen Formulierung nach einem der Ansprüche 1 bis 10 zur Herstellung von Dichtschlämmen, Deckbeschichtungen, Klebstoffen oder Estrichen.

## Revendications

1. Formulation chimique de construction comprenant
a) du sulfate de calcium en une quantité de 1 à 10 % en poids,
b) au moins un formateur d'ettringite choisi parmi le ciment sulfoaluminate de calcium (ciment CSA), l'aluminate de sodium, le ciment alumineux, le sulfate d'aluminium et leurs mélanges, en une quantité de 3 à 9 % en poids,
c) au moins un activateur choisi parmi le ciment Portland, l'hydroxyde de calcium, l'hydroxyde de sodium, l'hydroxyde de potassium et leurs mélanges, en une quantité de 1 à 10 % en poids,
d) au moins un agrégat en une quantité de 43 à 85 % en poids, et
e) au moins un liant polymérique en une quantité de 10 à 30 % en poids,
la quantité des composants étant basée sur le poids total des solides des composants a) à e).

2. Formulation chimique de construction selon la revendication **1,** dans laquelle le sulfate de calcium est choisi parmi le sulfate de calcium α-hémihydraté, le sulfate de calcium β-hémihydraté, l'anhydrite et leurs mélanges.

3. Formulation chimique de construction selon la revendication 1 ou 2, dans laquelle le sulfate de calcium est présent dans la formulation en une quantité de 1 à 8 % en poids.

4. Formulation chimique de construction selon l'une quelconque des revendications précédentes, dans laquelle le liant polymérique est un polymère à base d'esters (méth)acryliques, de composés vinylaromatiques, d'esters vinyliques, d'halogénures de vinyle, de diènes, ou d'oléfines, ou un copolymère de deux ou plus de ces monomères, ou un mélange de deux ou plusieurs des polymères et/ou copolymères.

5. Formulation chimique de construction selon la revendication 4, dans laquelle le liant polymérique est un polymère à base de styrène, d'un ester (méth)acrylique, de poly(acétate de vinyle), ou d'un copolymère de ceux-ci, ou un mélange de deux ou plusieurs des polymères ou copolymères.

6. Formulation chimique de construction selon la revendication 1, comprenant
a) du sulfate de calcium en une quantité de 1 à 9 % en poids,
b) au moins un formateur d'ettringite en une quantité de 3 à 9 % en poids,
c) au moins un activateur en une quantité de 1 à 9 % en poids,
d) un agrégat en une quantité de 43 à 85 % en poids et
e) un liant polymérique en une quantité de 10 à 30 % en poids.

7. Formulation chimique de construction selon l'une quelconque des revendications précédentes, comprenant de plus au moins un additif.

8. Formulation chimique de construction selon la revendication 7, dans laquelle l'additif est choisi parmi des charges, des plastifiants, des retardateurs de prise, des accélérateurs de prise, des épaississants, et leurs mélanges.

9. Formulation chimique de construction selon l'une quelconque des revendications précédentes, dans laquelle l'agrégat est choisi parmi le sable, le calcaire concassé ou un mélange de ceux-ci.

10. Formulation chimique de construction selon l'une quelconque des revendications précédentes, sous la forme de deux parties, dans laquelle la première partie comprend les composants a) à d) et la deuxième partie comprend le composant e) sous la forme d'une dispersion aqueuse de polymère.

11. Utilisation de la formulation chimique de construction selon l'une quelconque des revendications 1 à 10 pour la préparation de coulis d'étanchéité, de revêtements de toit, d'adhésifs ou de chapes.
